Europäisches Patentamt

European Patent Office

Office européen des brevets

(11) Publication number: **0 489 168 A1**

## EUROPEAN PATENT APPLICATION
### published in accordance with Art. 158(3) EPC

(21) Application number: **91910893.6**

(22) Date of filing: **21.06.91**

(86) International application number:
**PCT/JP91/00839**

(87) International publication number:
**WO 92/00166 (09.01.92 92/02)**

(51) Int. Cl.⁵: **B25J 9/06**

(30) Priority: **22.06.90 JP 162947/90**

(43) Date of publication of application:
**10.06.92 Bulletin 92/24**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi**
**Fuyo Haitsu 308, 65-4, Takakura-hcho**
**Hachioji-shi, Tokyo 192(JP)**

Inventor: **NAITO, Yasuo, Fanuc Mansion**
**Harimomi 7-205**
**3539-1,Shibokusa Oshino-mura**
**Minamitsuru-gun**
**Yamanashi 401-05(JP)**
Inventor: **OKADA, Takeshi, Fanuc Dai-3**
**Vira-karamatsu**
**3527-1,Shibokusa Oshino-mura**
**Minamitsuru-gun**
**Yamanashi 401-05(JP)**

(74) Representative: **Otte, Peter, Dipl.-Ing.**
**Tiroler Strasse 15**
**W-7250 Leonberg(DE)**

(54) **ARM DRIVING MECHANISM IN INDUSTRIAL ARTICULATED ROBOT.**

(57) Arm driving mechanism in an industrial articulated robot, wherein the rear end of a first arm (12) is controllably rotatably supported by a fixing member (10, 33, 35) nonrotatably fixed on a swinging base (11b) swingable about a longitudinal axis through a W-axis driving motor (M₂), a support member (30, 34, 36) is rotatably supported on the forward end of the first arm (12), the proximal end of a second arm (13) is controllably rotatably supported on the support member (30, 34, 36) through a U-axis driving motor (M₃), the fixing member (10, 33, 35) and the support member (30, 34, 36) are connected to each other so as to form two link elements of a parallel link mechanism, the first arm is driven by the W-axis driving motor (M₂) having a low output, and the second arm is driven by the U-axis driving motor (M₃) in such a manner that the second arm has a high degree of freedom in swinging operations.

Fig. 3

## TECHNICAL FIELD

The present invention relates to an industrial articulated robot having multiple degrees of freedom of motion in a three-dimensional space, and more particularly, to a novel drive mechanism for an arm of an articulated robot provided with a plurality of arms each capable of turning about a horizontal axis on a joint.

## BACKGROUND ART

A prior art industrial articulated robot has a drive mechanism in which a parallel link mechanism is arranged between a first arm (W-axis arm) joined to a swivel body and a second arm (U-axis arm) joined to a front end of the first arm, and two drive motors disposed on the axis of turning of the first arm are arranged in a manner such that one of the two motors drives a rotation of the first arm and the other of the two drive motors drives a rotation of the second arm through the parallel link mechanism.

Another prior art industrial articulated robot has a drive mechanism in which a drive motor provided on a joint about which a W-axis arm turns directly drives a turning of the W-axis arm, and another drive motor provided on a joint about which a U-axis arm turns directly drives a turning of the U-axis arm.

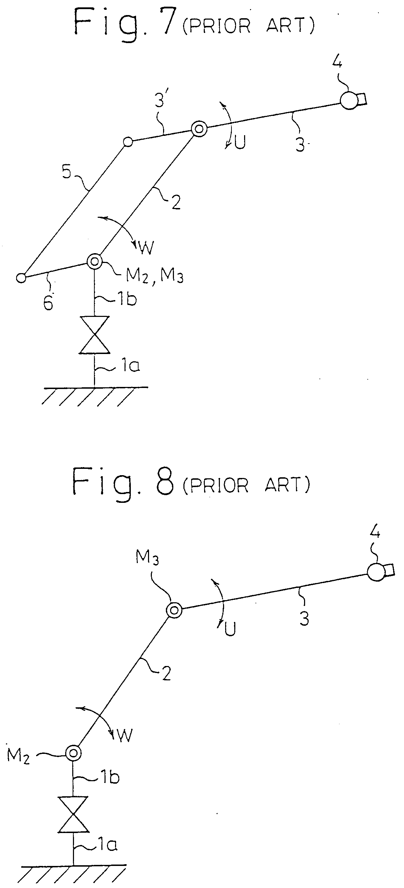

As illustrated in Fig. 7, in the articulated robot provided with the drive mechanism having a parallel link mechanism, a W-axis arm 2 is pivotally joined at the rear end thereof to a swivel base (W-axis base) 1b mounted upright on a stationary base 1a fixed to a floor so that it is turnable about the longitudinal axis thereof relative to the fixed base 1b, and a U-axis arm 3 is pivotally joined to the front end of the W-axis arm 2. Further, a parallel linkage mechanism is constructed by a rear extension 3a of the U-axis arm 3, the W-axis arm 2 and two connecting links 5 and 6, and a W-axis drive motor $M_2$ is provided on a joint pivotally joining the rear end of the W-axis arm 2 and the W-axis base 1b, to thereby turn and control the W-axis arm 2 in directions indicated by an arrow W. A U-axis drive motor $M_3$ is provided on the joint pivotally joining the rear end of the W-axis arm 2 and the W-axis base 1b, to thereby drive and control the turning of the U-axis arm 3 in directions indicated by an arrow U. A robot wrist 4 is mounted so that it is turnable about a plurality of turning axes on the front end of the U-axis arm 3, and is driven by a wrist drive motor, not shown, mounted on the U-axis arm 3 or on the extension 3a of the U-axis arm 3.

As illustrated in Fig. 8, an articulated robot provided with the direct drive mechanism includes a stationary base 1a, a W-axis base 1b mounted for rotation about the longitudinal axis thereof on the stationary base 1a, a W-axis arm 2 pivotally joined at the base end thereof to the W-axis base 1b to be driven for a controlled turning by a W-axis drive motor $M_2$, and a U-axis arm 3 pivotally joined to the front end of the W-axis arm 2 to be driven for a controlled turning by a U-axis drive motor $M_3$.

It should be understood that, in the former drive mechanism shown in Fig. 7, a moment acting on the U-axis arm 3 does not act on the W-axis arm 2, and therefore, a load torque on the W-axis drive motor $M_2$ can be reduced. Nevertheless, the existence of the parallel linkage mechanism must limit the operation of the U-axis arm 3 to a comparatively narrow angular range.

The direct drive mechanism shown in Fig. 8, permits the U-axis arm 3 to operate over a sufficiently wide angular range, but the W-axis drive motor $M_2$ must be a motor having a large output capacity because a load moment on the U-axis arm 3 acts directly on the W-axis arm 2.

## DISCLOSURE OF THE INVENTION

Therefore, an object of the present invention is to solve the problems encountered by the drive mechanisms of the foregoing prior art articulated robots.

Another object of the present invention is to provide an industrial articulated robot provided with a novel arm drive mechanism capable of reducing the load on a W-axis drive motor $M_2$ for driving the first arm (W-axis arm) of the articulated robot, and of increasing the angular range of operation of the second arm (U-axis arm) of the articulated robot.

In accordance with the present invention, there is provided an industrial articulated robot comprising, in combination, at least:

a stationary base to be used as a bottom unit;

a swivel base capable of turning about a longitudinal axis thereof relative to the stationary base;

a first arm (W-axis arm) capable of turning about a horizontal axis relative to the swivel base;

a second arm (U-axis arm) capable of turning about a horizontal axis relative to the first arm;

W-axis drive motor means for driving the first arm;

U-axis drive motor means for driving the second arm; and

a robot wrist having multiple degrees of freedom of motion and provided on the front end of the second arm, wherein an improvement comprises:

a fixed member fixed to the swivel base to be restrained from turning relative to the swivel base and supporting the second arm at a rear end thereof so that the second arm can be driven by the W-axis drive motor means for a controlled turning;

a supporting member pivotally joined to a front end of the first arm and pivotally joined to a rear end of the second arm so that the second arm can be driven by the U-axis drive motor means for a controlled turning; and

a parallel linkage mechanism including at least said first arm, said fixed member and said supporting member, and being capable of performing a linkage motion in response to the turning motion of said first arm caused by the W-axis drive motor means.

BRIEF DESCRIPTION OF THE DRAWINGS

The above and other objects, features and advantages of the present invention will become more apparent from the following description taken in connection with the accompanying drawings, wherein:

Fig. 1 is a diagrammatic view of assistance in explaining a structural principle on which is based an arm drive mechanism for an industrial articulated robot according to a first embodiment of the present invention;

Fig. 2A is a diagrammatic view of assistance in explaining the dynamics of the arm drive mechanism of Fig. 1;

Fig. 2B is a schematic diagram of an analytical model of the arm drive mechanism shown in Fig. 1;

Fig. 3 is a front view of an industrial articulated robot provided with the arm drive mechanism of Fig. 1;

Fig. 4 is a sectional view taken along the line IV-IV of Fig. 3;

Fig. 5 is a schematic side view of an arm drive mechanism for an industrial articulated robot according to a second embodiment of the present invention;

Fig. 6 is a schematic side view of an industrial articulated robot according to a third embodiment of the present invention;

Fig. 7 is a schematic side view of a prior art arm drive mechanism for an industrial articulated robot including a parallel linkage; and

Fig. 8 is a schematic side view of a prior art industrial articulated robot having first and second arms directly driven by drive motors, respectively.

BEST MODE OF CARRYING OUT THE INVENTION

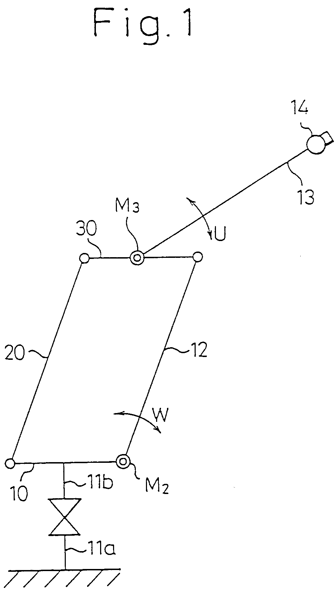

Referring to Fig. 1, an industrial articulated robot has a swivel base 11b (hereinafter referred to as "W-axis base) mounted upright on a stationary base 11a fixedly mounted on the floor. The W-axis base 11b is driven by a drive motor, not shown, for a controlled swiveling motion in directions indicated by an arrow $\theta$ about a longitudinal axis thereof. An arm is joined to the W-axis base 11b, and a drive mechanism for driving the arm is mounted on the W-axis base 11b. A fixed level 10 is fixed in a horizontal position to the W-axis base 11b, a first arm (W-axis arm) 12 is pivotally supported at its rear end through a W-axis drive motor $M_2$ to one end of the fixed lever 10 for a controlled rotation in directions indicated by an arrow W. A connecting lever 20 having a length thereof equal to that of the first arm 12 is pivotally joined to the other end of the fixed lever 10.

A supporting lever 30 equal in length to the fixed lever 10 has one end pivotally joined to the upper end of the first arm 12 and the other end pivotally joined to the upper end of the connecting lever 20. Thus, the fixed lever 10, the W-axis arm 12, the connecting lever 20 and the supporting lever 30 form a parallel linkage mechanism.

The arm drive mechanism in this embodiment has the following features. A second arm (U-axis arm) 13 is supported through a U-axis drive motor $M_3$ for driving the same for a controlled rotation in directions indicated by an arrow U at a position on the supporting lever 30, i.e., the middle point of the supporting lever 30 in this embodiment. An ordinary robot wrist 14 is mounted on the front end of the second arm 13.

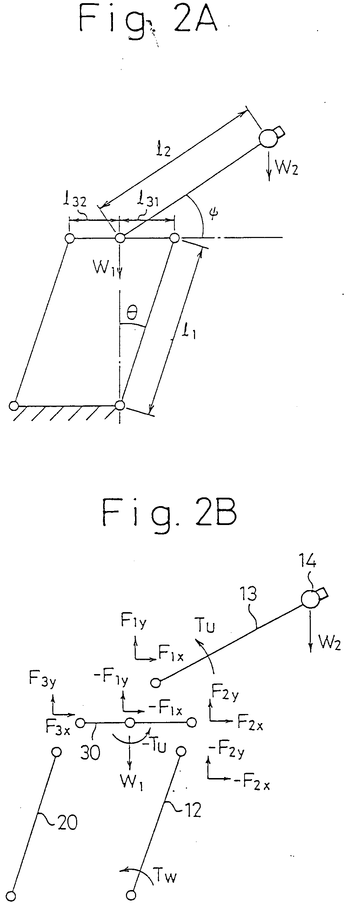

The following equations of equilibrium can be obtained through a consideration of forces acting in the arm drive mechanism of the foregoing articulated robot and equilibrium of moments of forces with reference to Figs. 2A and 2B.

Regarding the second arm (U-axis arm) 13 having a length $l_2$ , when the moments of forces are in equilibrium,

$$T_u - W_2 \cdot l_2 \cos \phi = 0 \qquad (1)$$

when vertical forces are in equilibrium,

$$F_{ly} - W_2 = 0 \qquad (2)$$

and when horizontal forces are in equilibrium,

$$F_{lx} = 0 \qquad (3)$$

Assume that the length of a portion of the supporting lever 30 on one side of a fulcrum is $l_{31}$ and the length of a portion of the same on the other side of the fulcrum is $l_{32}$. Then, as shown in Fig. 2B, when the moments of forces are in equilibrium,

$$-J_u + F_{2y} \cdot l_{31} - F_{3y} \cdot l_{32} = 0 \qquad (4)$$

when vertical forces are in equilibrium,

$$F_{3y} - F_{ly} + F_{2y} - W_l = 0 \quad (5)$$

and when horizontal forces are in equilibrium,

$$F_{3x} - F_{lx} + F_{2x} = 0 \quad (6)$$

Regarding the first arm (W-axis arm) 12, when the moments of forces are in equilibrium,

$$T_w - F_{2y} \cdot l_1 \sin\theta + F_{2x} \cdot l_1 \cos\theta = 0 \quad (7)$$

Since $\tan\theta = F_{3x}/F_{3y}$, from the equations (1) through (7),

$$T_w = (W_1 + W_2)l_1 \sin\theta \quad (8)$$

where $T_w$ is a moment acting on the W-axis arm 12. As is obvious from the equation (8), the moment $T_w$ can be independent of the moment $T_u$.

Thus, in the arm drive mechanism of the articulated robot shown in Fig. 1, the moment $T_u$ acting on the second arm (U-axis arm) 13 is not loaded on the W-axis drive motor $M_2$ for driving the first arm (W-axis arm) 12.

The W-axis drive motor $M_2$ may have a relatively small output capacity because the moment acting on the U-axis arm 13 provided with the robot wrist 14 does not affect the W-axis arm 12, and furthermore, the U-axis arm 13 can be turned through a wide angular range on a pivotal joint on the supporting lever 30 because the turning of the U-axis arm 13 is directly driven by the U-axis drive motor $M_3$. Accordingly, the load on the W-axis drive motor $M_2$ of the drive mechanism in this embodiment is smaller than that on the W-axis drive motor $M_2$ of the prior art arm drive mechanism shown in Fig. 8, and thus the W-axis drive motor $M_2$ of the arm drive mechanism in this embodiment may have a relatively small output capacity.

Nevertheless, the range of turning motion of the W-axis arm 12 must be subjected to a given restriction, due to the existence of the parallel linkage.

Figures, 3 and 4 illustrate a detailed construction of the industrial articulated robot having multiple degrees of freedom of motion and employing the arm drive mechanism shown in Fig. 1.

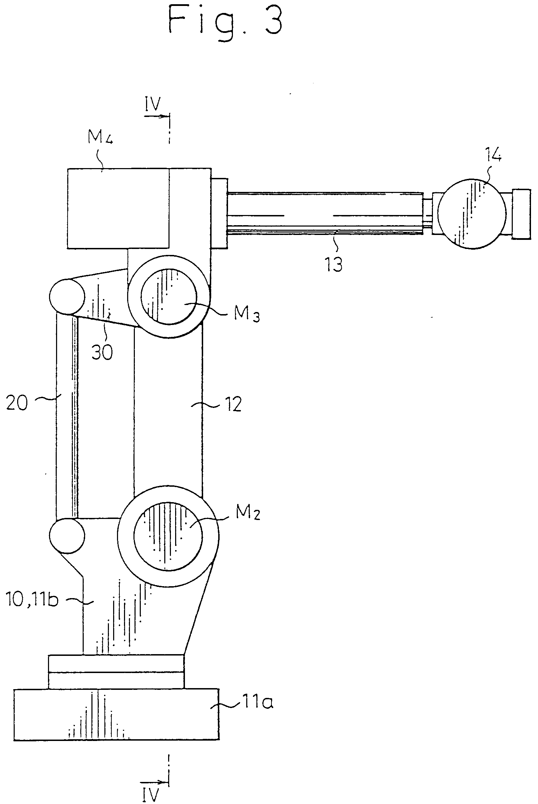

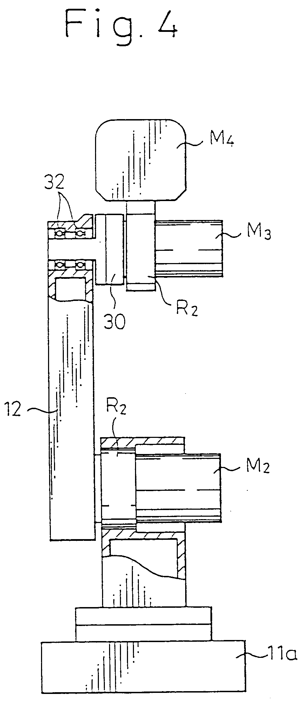

In Figs. 3 and 4, parts like or corresponding to those shown in Fig. 1 are denoted by the same reference characters.

In the articulated robot shown in Figs. 3 and 4, the W-axis base 11b and the fixed lever 10 are formed integrally as one body, and the W-axis arm 12 and the connecting lever 20 are pivotally supported at two positions, respectively, on the body.

The supporting lever 30 is pivotally joined at one end thereof to the upper end of the W-axis arm 12. A pivot shaft attached to the other end of the supporting lever 30 is supported in rotary bearings 32 mounted on the upper end of the W-axis arm 12. The U-axis drive motor $M_3$ is coupled coaxially through a coaxial reduction gear $R_2$ with the pivot shaft to drive the U-axis arm 13 for a controlled turning thereof relative to the supporting lever 30. Thus, in this articulated robot, the length $l_{31}$ of the portion of the supporting lever 30 of the first arm drive mechanism is infinitesimal.

The W-axis drive motor $M_2$ drives the W-axis arm 12 through a coaxial reduction gear $R_2$.

Since the construction of the arm drive mechanism of the industrial articulated robot shown in Figs. 3 and 4 is substantially equivalent to that of the arm drive mechanism shown in Fig. 1, naturally, the U-axis arm is able to turn through a wide angular range, and the load on the W-axis drive motor $M_2$ is reduced. A wrist drive motor $M_4$ is mounted on the rear end of the U-axis arm 13, and the robot wrist 14 has two or three degrees of freedom of motion. Accordingly, the articulated robot has five or six degrees of freedom of motion in a three-dimensional space.

An arm drive mechanism according to the second embodiment of the present invention will be described hereinafter.

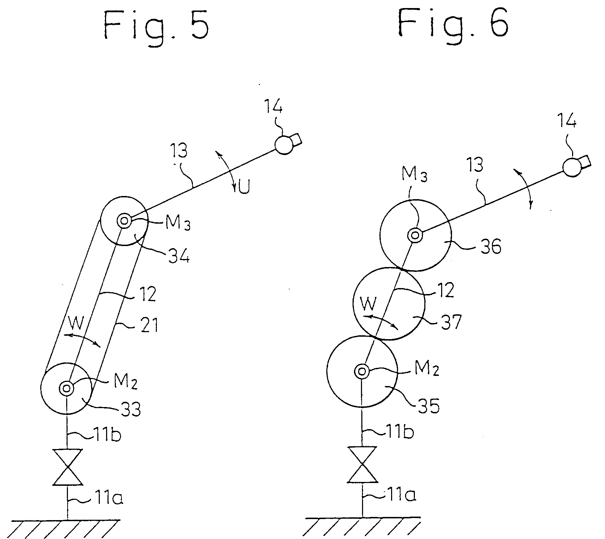

Referring to Fig. 5, an industrial articulated robot incorporating the arm drive mechanism in the second embodiment includes a stationary base 11a, a W-axis base 11b mounted on the stationary base 11a for a rotation about its longitudinal axis relative to the stationary base 11a, a fixed sprocket 33 fixed to the W-axis base 11b, a W-axis arm 12 supported on a shaft coaxial wit the fixed sprocket 33 to be driven by a W-axis drive motor $M_2$ for a controlled turning in directions indicated by an arrow W, a supporting sprocket 34 having a diameter equal to that of the fixed sprocket 33, and pivotally supported on the upper end of the W-axis arm 12, a drive chain 21 wound around the sprockets 33 and 34, and a U-axis arm 13 supported on a shaft coaxial with the supporting sprocket 34 to be driven by a U-axis motor $M_3$ for a controlled turning in directions indicated by an arrow U.

When the W-axis arm 12 is rotated in directions indicated by the arrow W, the supporting sprocket 34 effects the functions of the supporting lever 30 of the parallel linkage employed by the arm drive mechanism of the first embodiment. Thus, the arm drive mechanism of the second embodiment has the same functions and advantages as those of the arm drive mechanism of the first embodiment.

Furthermore, the W-axis arm 12 of the second embodiment is able to turn in a sufficiently wide angular range because the turning of the W-axis arm 12 is not restricted by a dead point possessed by a parallel linkage mechanism.

Figure 6 shows an industrial articulated robot incorporating an arm drive mechanism according to a third embodiment of the present invention.

As shown in Fig. 6, the industrial articulated robot includes a W-axis base 11b, a fixed gear 35 fixed to the W-axis base 11b, a W-axis arm 12 supported on a shaft coaxial with the fixed gear 35 to be driven by a W-axis motor $M_2$ for a controlled rotation in directions indicated by an arrow W, a supporting gear 36 having a diameter equal to that of the fixed gear 35 and pivotally supported on the front end of the W-axis arm 12, an intermediate gear 37 interconnecting the fixed gear 35 and the supporting gear 36, and a U-axis arm 13 supported on the shaft of the supporting gear 36 to be driven by a U-axis motor $M_3$ for a controlled rotation in directions indicated by an arrow U.

The arm drive mechanism shown in Fig 6 has the same functions and advantages as the arm drive mechanism shown in Fig. 5.

As apparent from the foregoing, in accordance with the present invention, an industrial articulated robot is provided with an arm drive mechanism constituted by pivotally joining a first arm (W-axis arm) at the base end thereof to a fixed member relatively non-turnable fixed to a swiveling W-axis base so that a controlled turning of the first arm is driven by a W-axis motor M, pivotally joining a supporting member to the front end of the first arm, pivotally joining a second arm (U-axis arm) to the supporting arm to be driven by a U-axis drive motor $M_3$ for a controlled turning, and interconnecting the fixed member and the supporting member so that the fixed member and the supporting member are the two parallel link members of a parallel linkage mechanism. Accordingly, the W-axis motor $M_2$ for driving the first arm (W-axis arm) is not adversely affected by a load moment acting on the second arm provided with a robot wrist at the front end thereof. Consequently, the W-axis drive motor $M_2$ may have a relatively small output capacity, and the second arm can be directly driven by the U-axis motor for turning over a sufficiently wide angular range.

LIST OF REFERENCE CHARACTERS

| 1a | Swivel base |
| 1b | W-axis base |
| 2 | W-axis arm |
| 3 | U-axis arm |
| 3' | Extension |
| 4 | Robot wrist |
| 5 | Connecting lever |
| 6 | Connecting lever |

| 11a | Fixed base |
| 11b | W-axis base |
| 12 | First arm (W-axis arm) |
| 13 | Second arm (U-axis arm) |
| 14 | Robot wrist |
| 20 | Connecting lever |
| 30 | Supporting lever |
| 32 | Rotary bearing |
| 33 | Fixed sprocket |
| 34 | Supporting sprocket |
| 36 | Supporting gear |
| 37 | Intermediate gear |

**Claims**

1. An industrial articulated robot including, in combination:

   a stationary base provided as a bottom unit;

   a swivel base capable of turning about a longitudinal axis thereof relative to said stationary base;

   a first W-axis arm capable of turning about a horizontal axis relative to said swivel base;

   a second U-axis arm capable of turning about another horizontal axis relative to said first arm;

   a W-axis drive motor means for driving said first arm;

   a U-axis drive motor means for driving said second arm; and

   a robot wrist provided on a front end of said second arm and having multiple degrees of freedom of motion;

   wherein an improvement thereof is characterized by comprising:

   a fixed member fixed to said swivel base to be restrained from turning relative to said swivel base, and pivotally supporting said second arm at a rear end thereof so that said second arm is driven by said W-axis drive motor means for a controlled turning thereof;

   a supporting member pivotally joined to a front end of said first arm, and pivotally joined to the rear end of said second arm so that said second arm is driven by said U-axis drive motor means for a controlled turning thereof; and

   a parallel linkage mechanism provided with link members formed respectively by at least said first arm, said fixed member, and said supporting member, said parallel linkage being capable of performing a linkage motion in response to a turning motion of said first arm generated by said W-axis drive motor means.

2. An industrial articulated robot according to claim 1, wherein said parallel linkage mechanism is further provided with a connecting member having one end connected to said fixed member and the other end connected to said supporting member.

3. An industrial articulated robot according to claim 2, wherein said parallel linkage mechanism comprises:

a fixed sprocket fixed to said swivel base, and pivotally supporting a rear end of said first arm to thereby function as said fixed member;

a supporting sprocket pivotally supported on the front end of said first arm, and functioning as said supporting member;

a drive chain arranged to be wound around said fixed sprocket and said supporting sprocket to function as said connecting member.

4. An industrial articulated robot according to claim 2, wherein said parallel linkage mechanism comprises:

a fixed gear element fixed to said swivel base and pivotally supporting a rear end of said first arm to thereby function as said fixed member;

a supporting gear element pivotally supported on the front end of said first arm to function as said supporting member; and

an intermediate gear element engaged with both said fixed gear element and said supporting gear element to thereby function as said connecting member.

5. An industrial articulated robot according to claim 1, wherein said swivel base and said fixed member of said parallel linkage mechanism are formed integrally as one body.

# Fig.1

# Fig. 2A

# Fig. 2B

# Fig. 3

# Fig. 4

# Fig. 5

# Fig. 6

Fig. 7 (PRIOR ART)

Fig. 8 (PRIOR ART)

# INTERNATIONAL SEARCH REPORT

International Application No PCT/JP91/00839

## I. CLASSIFICATION OF SUBJECT MATTER (if several classification symbols apply, indicate all)

According to International Patent Classification (IPC) or to both National Classification and IPC

Int. Cl$^5$  B25J9/06

## II. FIELDS SEARCHED

### Minimum Documentation Searched

| Classification System | Classification Symbols |
|---|---|
| IPC | B25J9/06 |

### Documentation Searched other than Minimum Documentation to the Extent that such Documents are Included in the Fields Searched

| | |
|---|---|
| Jitsuyo Shinan Koho | 1926 - 1991 |
| Kokai Jitsuyo Shinan Koho | 1971 - 1991 |

## III. DOCUMENTS CONSIDERED TO BE RELEVANT

| Category * | Citation of Document, [11] with indication, where appropriate, of the relevant passages [12] | Relevant to Claim No. [13] |
|---|---|---|
| Y | JP, A, 60-255382 (Daifuku K.K.),<br>December 17, 1985 (17. 12. 85),<br>(Family: none) | 1-5 |
| Y | JP, A, 59-107878 (Nissan Motor<br>Co., Ltd.),<br>June 22, 1984 (22. 06. 84),<br>(Family: none) | 3 |
| Y | JP, A, 58-143991 (Nichihei Toyama K.K.),<br>August 26, 1983 (26. 08. 83),<br>(Family: none) | 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 24, 1991 (24. 07. 91) | August 12, 1991 (12. 08. 91) |

| International Searching Authority | Signature of Authorized Officer |
|---|---|
| Japanese Patent Office | |

Form PCT/ISA/210 (second sheet) (January 1985)